# EUROPEAN PATENT APPLICATION

(11) **EP 4 628 472 A1**
(43) Date of publication of application: **08.10.2025**
(21) Application number: 25168926.1
(22) Date of filing: 07.04.2025
(51) Int. Cl.: C04B 35/80, C04B 38/00, B32B 18/00, C04B 35/565, F01D 5/28, F01D 25/12

(54) **CORES FOR CERAMIC MATRIX COMPOSITE COMPONENTS**

(30) Priority: 05.04.2024 US 202418628281
(71) Applicant: RTX Corporation, Farmington, CT 06032 (US)
(72) Inventor: DWYER, John, Farmington, 06032 (US); LILES, Howard, Farmington, 06032 (US)
(74) Representative: Dehns

(57) **Abstract**

The preparation of ceramic matrix composite (CMCs) is disclosed in which a ceramic matrix composite (CMC) preform is made with one or more integrated polymer core inserts (30) made of a fugitive material containing polyvinyl butyral. The preform with integrated polymer core inserts (30) to a heat treatment to remove the one or more polymer core inserts (30) (e.g., by melting or burning). Removal of the polymer core inserts forms one or more internal cavities within the composite, which can then be subjected to densification.

## Description

### Field of the Invention

The present disclosure relates generally to methods for manufacturing ceramic matrix composites (CMCs). In particular, the present disclosure concerns manufacturing CMC components with internal cavities, for example, to provide cooling channels.

### Background

Due to their heat resistance, ceramic matrix composite materials are used in manufacturing devices that are subject to high temperature exposure (e.g., ≥1200°C) such as gas turbine engines. However, in high temperature applications, even turbomachinery parts made from CMCs can experience stress, for example, due to formation of thermal gradients. These stresses can reduce the operational lifespan of the CMC parts. In such cases, it is often desirable to provide CMC components with structures to facilitate cooling during operation, particularly near surfaces where the component comes into contact with high temperature gases.

For example, the skins of components, i.e., the regions close to the gas flow path (e.g., depth of 0.5 to 2 inches (1.3 to 5.1 cm) below the outer surface) can be provided with cooling structures, e.g., holes, channels, or similar cavities, to enhance cooling and improve heat distribution. In particular, such structures can from parts of circuits that provide for flow of a coolant such as air. However, creating such cooling structures in CMC components can be challenging due to their unique method of manufacturing and their material properties. Current methods employed for creating such structures include drilling and machining holes, pockets or channels into surfaces and using plates to cover the resultant structures. Other methods involve using a mandrel during layup which is subsequently removed leaving a hollow cavity. These techniques are expensive. Also, they are line of sight manufacturing techniques which limit the types and shapes of cooling structures that can be created and, thus, are not always able to generate ideal shapes and cooling features desired from an optimized heat transfer perspective.

The need exists to provide techniques that exhibit greater flexibility and allow for the creation of more complex internal structures in the manufacturing CMC components with internal structures, as wells as such methods that provide cooling channels that enhance performance by increasing cooling efficiency and by minimizing leakage. Further, the need exists for methods that can provide such internal structures at lower costs.

### Summary

According to an embodiment of the disclosure, there is provided a method comprising:
preparing a ceramic matrix composite (CMC) preform with one or more integrated polymer core inserts, wherein each of the one or more integrated polymer core inserts are made of a fugitive material comprising polyvinyl butyral;
subjecting the preform with the one or more integrated polymer core inserts to a heat treatment to remove the one or more polymer core inserts, wherein removal of the one or more polymer core inserts forms one or more internal cavities within the composite; and
densifying the preform to form a ceramic matrix composite component with the one or more internal cavities.

According to another embodiment of the present disclosure, there is provided a ceramic matrix composite (CMC) intermediate comprising a preform formed from fabric prepreg sections containing fibers, CMC matrix precursors, and binder, and further comprising one or more PVB inserts polymer core inserts integrated into the preform, wherein each of the polymer core inserts comprises polyvinyl butyral.

According to another embodiment of the present disclosure, there is provided method of preparing a ceramic matrix composite (CMC) intermediate comprising forming a preform by laying up fabric prepreg sections containing fibers, CMC matrix precursors, and binder, and, during the laying up of the fabric prepreg sections, inserting one or more core inserts into the preform, wherein the one or more core inserts are made of a fugitive material comprising polyvinyl butyral (PVB).

In a further embodiment of any of the previous embodiments, the polymer core insert(s) consist of polyvinyl butyral.

In a further embodiment of any of the previous embodiments, the polymer core insert(s) are prepared by injection molding. According to another embodiment, the polymer core insert(s) are prepared by additive manufacturing.

In a further embodiment of any of the previous embodiments, the polymer core insert(s) may have a linear structure. Alternatively, the polymer core insert(s) may have a non-linear structure and/or may have non-line of sight features.

In a further embodiment of any of the previous embodiments, the polymer core insert(s) may have a width of 0.015 to 0.050 inches (0.38 to 1.3 mm) in the direction normal to the plies of the preform.

In a further embodiment of any of the previous embodiments, the ceramic matrix composite is a SiC/SiC composite.

In a further embodiment of any of the previous embodiments, the preform is constructed such that the polymer core insert(s) are positioned adjacent an exterior surface of the preform.

In a further embodiment of any of the previous embodiments, the polymer core insert(s) are removed by heating the preform to a temperature at which the polymer core inserts will melt. Alternatively, according to another embodiment of any of the previous embodiments, the polymer core insert(s) are removed by heating the preform to a temperature at which the polymer core inserts burn.

In a further embodiment of any of the previous embodiments, the method includes drilling holes into the ceramic matrix composite component to provide passageways into the internal cavities.

In a further embodiment of any of the previous embodiments, the preform is prepared by laying up fabric prepreg sections containing fibers, CMC matrix precursors, and binder, and incorporating the polymer core insert(s) into the preform during the layering up of fabric prepreg sections.

In a further embodiment of any of the previous embodiments, densifying the preform by chemical vapor filtration infiltration.

### Brief Description of the Drawings

Implementations of the inventive concepts disclosed herein may be better understood when consideration is given to the following detailed description thereof. Such description make refers to the included drawings, which are not necessarily to scale, and which some features may be exaggerated and some features may be omitted or may be represented schematically in the interest of clarity. Like reference numerals in the drawings may represent and refer to the same or similar element, feature, or function. **In** the drawings:
Figure 1 shows a cross sectional side view of a CMC preform without polymer core insert.
Figure 2 shows a cross sectional side view of a CMC preform with a polymer core insert.
Figure 3 shows a cross sectional top view of a CMC preform with a polymer core insert having various shapes and structures.
Figure 4 shows a cross sectional side view of a CMC composite having an internal cavity formed by removal of a polymer core insert, with drill holes providing fluid communication between the internal cavity and the exterior of the composite.

### Detailed Description

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

By providing internal cavities within CMC components, particularly near the skin or outer surface of the component, it is possible to provide means for cooling the component to reduce high temperatures and improved heat distribution, thereby reducing stress caused by thermal gradients. Current techniques for providing cavities to create cooling passageways in CMC components include drilling and machining. However, such techniques are expensive and are limited with respect to the types of cavities that can be formed.

Using polyvinyl butyral (PVB) core inserts in accordance with the present disclosure, internal cavities can be formed in CMCs in a manner that will provide the ability to focus cooling in high temperatures areas and produce cooling circuits that can improve heat distribution. Additionally, the PVB core inserts provide the ability to form a large variety of cooling circuits including complex circuits having non-linear structures and/or non-line of sight features.

Polyvinyl butyral is a relatively inexpensive material and its chemistry is compatible with CMC materials. Further, polyvinyl butyral has a relatively low melting point of 329°F to 365°F (165°C to 185°C) and a combustion temperature of around 670°F (354°C), making removal of the PVB core inserts relatively easy. Thus, PVB core inserts provide a low cost means for forming internal cavities within CMC components. The use of such cores can also eliminate the need for cover plates, as used in the previously mentioned machining techniques, thereby providing further cost savings.

The PVB core inserts can be manufactured by, for example, injection molding or additive manufacturing such as fused deposition modeling (FDM) or selective laser sintering (SLS). Using such techniques, the structure of the PVB core inserts, and hence the internal cavities formed therefrom, can vary widely, and can include complex formations.

For example, the PVB core insert can have an elongated linear structure such as a rod, bar, or prism for producing a cavity which is a channel having, e.g., a circular, square, or rectangular cross section. Alternatively, the PVB core insert can have a non-linear shape or can exhibit non-line of sight features. For example, the PVB core insert can have a wavy or serpentine shape to provide channels having curved structures. Alternatively, the PVB core insert can have a step structure connecting two parallel linear structures or can have sections with different widths or cross sectional shapes, e.g., two cylindrical sections having cross sections with different diameters.

The height of the core insert, i.e., in the direction normal to the plies of the preform, is for example, 0.015 to 0.050 inches (0.38 to 1.3 mm). The length of the PVB core inserts can vary, taking into account the size of the CMC component to be made, and the width of the PVB core inserts can vary, taking into account the desired structural integrity of the CMC component.

The composite intermediate, i.e., the preform with the one or more integrated PVB core inserts, is prepared by laying up fabric prepreg sections (also called tapes or plies) containing fibers (e.g. a 2D weave of waft and weft fibers), CMC matrix precursors, and binder. During the layup, the PVB core insert(s) are positioned in the preform and cover with further fabric prepreg sections whereby the PVB core insert(s) are embedded into the preform. The fabric plies can also be cut into various shapes and arrangements to "nest" with the PVB core on the same layer.

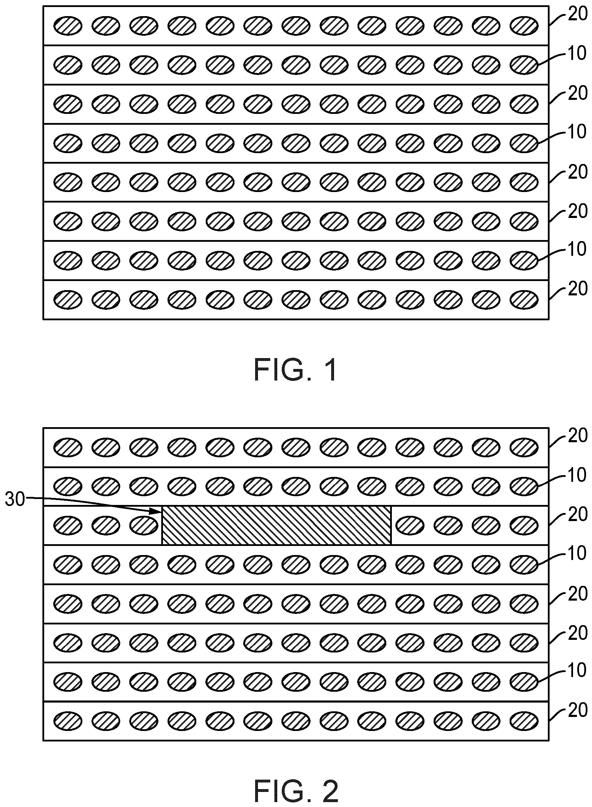

Fig. 1 shows a preform that does not contain a core insert. In this depiction, the circles represent the cross section of waft fibers 10 (or bundles of fibers) in each of the fabric layers 20. It is to be understood that each of these layers also contain weft fibers (not shown) woven in between the waft fibers.

Fig. 2 shows a similar preform but with a PVB core insert 30. The PVB core insert 30 is in the shape of an elongated rectangular prism or bar and is positioned near an upper surface of the preform. Removal of the PVB core insert 30 will provide an internal channel near the surface of the preform suitable for use as part of a cooling circuit.

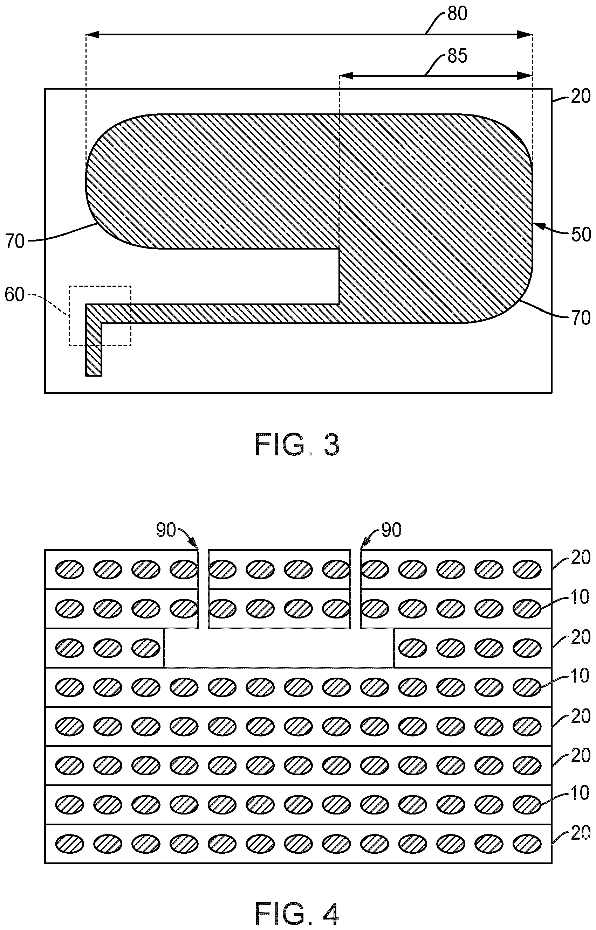

Fig. 3 shows a cross sectional view from the top of a preform containing PVB core insert 50 exhibiting various structural features. These features include step features 60, curved features 70, and features with differing widths 80 and 85.

Once formed, the preform is subject to a treatment to remove the PVB core insert(s). For example, the preform can be heated to a temperature above the melting point of PVB, for example, heated to 365°F to 670°F (185°C to 354°C). Melted PVB can then be removed through pores of the preform. To facilitate removal of the melted PVB, it is also possible to provide passageways through the preform to permit drainage. For example, during layup premade holes may be provided in the layup fabric so access to the core is provided. Also, laser holes may be drilled to the core depth, allowing for a drainage pathway.

Alternatively, the preform can be heated to a temperature sufficient to the PVB to burn or undergo pyrolysis, e.g., 700°F - 1000°F (371°C - 538°C) or 700°F - 800°F (371°C - 427°C). Gases resulting from the combustion are removed through pores or passageways as described above.

During and after removal of the PVB, the formed cavities can be held in shape by tooling. For example, the pre-densified preform can be held in place using graphite tooling with sufficient pressure being applied to prevent the empty cavities formed by the removal of the PVB from collapsing or deforming.

After removal of PVB and the formation of the internal cavities, the preform is subjected to densification to form the CMC. Densification can be performed by chemical vapor infiltration (CVI). CVI is a known technique to form matrices for fiber-reinforced material such as CMCs. In this technique, a heated gaseous matrix precursor infiltrates the porous fibrous preform and reacts with the fibers of the preform thereby forming a matrix around the fibers.

Following densification, it may be necessary to provide passageways from the exterior of the composite into the internal cavities in order to permit the flow of fluid, such as cooling air, into and out of the internal cavities. Such passageways can be achieved by, e.g., drilling holes into the composite. Fig. 4 shows the preform of Fig. 2 after removal of the PVB core insert and densification of the preform to form the composite. Holes 90 have been drilled into the composite to create passageways for fluid flow.

The use of PVB core inserts as disclosed herein can be used in the manufacture of CMCs to create a variety of internal cavities. Since, as noted above, PVB is compatible with CMC material chemically, the PVB core inserts can be used with a variety of CMC materials. For example, the resultant composite can be a SiC/SiC CMC.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope and spirit of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

Modifications and equivalents may be made to the features of the embodiments described above without departing from the spirit or scope of the invention. Thus, it is intended that the present invention covers the modifications and variations disclosed above provided that these changes come within the scope of the claims and their equivalents.

## Claims

1. A method comprising:
preparing a ceramic matrix composite (CMC) preform with one or more integrated polymer core inserts (30), wherein each of the one or more integrated polymer core inserts (30) are made of a fugitive material comprising polyvinyl butyral;
subjecting the preform with the one or more integrated polymer core inserts (30) to a heat treatment to remove the one or more polymer core inserts (30), wherein removal of the one or more polymer core inserts (30) forms one or more internal cavities within the composite; and
densifying the preform to form a ceramic matrix composite component with the one or more internal cavities.

2. The method according to claim 1, wherein the one or more polymer core inserts (30) comprises polyvinyl butyral.

3. The method according to claim 1 or 2, wherein the one or more polymer core inserts (30) are prepared by injection molding or additive manufacturing.

4. The method according to claim 1, 2 or 3, wherein the one or more polymer core inserts (30) have a height of 0.015 to 0.050 inches (0.38 to 1.3 mm).

5. The method according to any preceding claim, wherein the ceramic matrix composite is a SiC/SiC composite.

6. The method according to any preceding claim, wherein the preform is constructed such that the one or more polymer core inserts (30) are positioned adjacent an exterior surface of the preform.

7. The method according to any preceding claim, wherein removal of the one or more polymer core inserts (30) is performed by heating the preform to a temperature at which the polymer core inserts (30) will melt.

8. The method according to any of claims 1 to 6, wherein removal of the one or more polymer core inserts (30) is performed by heating the preform to a temperature at which the polymer core inserts (30) burn.

9. The method according to any preceding claim, further comprising drilling holes (90) into the ceramic matrix composite component to provide passageways into the internal cavities to permit fluid in and fluid flow out of the internal cavities.

10. The method according to any preceding claim, wherein said preform is prepared by laying up fabric prepreg sections containing fibers, CMC matrix precursors, and binder and the one or more integrated core inserts (30) are incorporated into preform during the layering up of fabric prepreg sections.

11. The method according to any preceding claim, wherein said densifying is performed by chemical vapor filtration infiltration.

12. A ceramic matrix composite (CMC) intermediate comprising a preform formed from fabric prepreg sections containing fibers, CMC matrix precursors, and binder, and further comprising one or more polymer core inserts (30) integrated into the preform, wherein each of the one or more polymer core inserts (30) comprises polyvinyl butyral.

13. The method or CMC intermediate according to any preceding claim, wherein the one or more polymer core inserts (30) have a linear structure or a non-linear structure.

14. The method or CMC intermediate according to any preceding claim, wherein the one or more polymer core inserts (30) have non-line of sight features.

15. A method of preparing a ceramic matrix composite (CMC) intermediate comprising: forming a preform by laying up fabric prepreg sections containing fibers, CMC matrix precursors, and binder, and, during the laying up of the fabric prepreg sections, inserting one or more core inserts (30) into the preform, wherein the one or more core inserts (30) are made of a fugitive material comprising polyvinyl butyral (PVB).
